**Europäisches Patentamt**

**European Patent Office**

**Office européen des brevets**

(19)

(11) Numéro de publication : **0 330 596 B1**

(12) # FASCICULE DE BREVET EUROPEEN

(45) Date de publication du fascicule du brevet :
**13.05.92 Bulletin 92/20**

(51) Int. Cl.⁵ : **A01D 34/82**

(21) Numéro de dépôt : **89440017.5**

(22) Date de dépôt : **23.02.89**

(54) **Tondeuse à gazon, en particulier poussée ou autotractée.**

(30) Priorité : **25.02.88 FR 8802575**

(43) Date de publication de la demande :
**30.08.89 Bulletin 89/35**

(45) Mention de la délivrance du brevet :
**13.05.92 Bulletin 92/20**

(84) Etats contractants désignés :
**AT BE CH DE ES GB IT LI NL SE**

(56) Documents cités :
**FR-A- 2 551 942**
**GB-A- 1 103 641**
**US-A- 2 757 013**

(73) Titulaire : **Outils Wolf, Société à responsabilité limitée**
**5, Rue de l'Industrie**
**F-67160 Wissembourg (FR)**

(72) Inventeur : **L'Inventeur a renoncé à sa désignation**

(74) Mandataire : **Nuss, Pierre et al**
**10, rue Jacques Kablé**
**F-67000 Strasbourg (FR)**

EP 0 330 596 B1

Jouve, 18, rue Saint-Denis, 75001 PARIS

# Description

La présente invention concerne le domaine de la construction de tondeuses à gazon, en particulier poussées ou autotractées, et a pour objet une telle tondeuse à gazon.

Actuellement la commande à distance de tondeuses à gazon est généralement effectuée par l'intermédiaire de transmissions linéaires constituées par des arbres flexibles ou des câbles guidés dans des gaines souples sous forme de ressorts hélicoïdaux et à spires jointives, ces'dites transmissions étant actionnées au moyen d'éléments de commande individuels fixés sur le guidon. Dans le cas de réalisation d'un nombre important de fonctions à l'aide de tels dispositifs, un nombre correspondant de transmissions individuelles devra être utilisé.

Les dispositifs connus de ce type présentent, cependant, l'inconvénient d'une fragilité individuelle de chaque transmission, notamment la fragilité à la flexion des gaines, et d'un risque d'enchevêtrement des différentes transmissions. En outre, un nombre élevé de transmissions nuit à l'esthétique des tondeuses ainsi équipées et, dans le cas d'un repliement du guidon, en particulier pour le transport ou pour l'emballage avant l'expédition, les diverses transmissions provoquent également une gêne du fait qu'elles restent généralement reliées à l'élément de commande fixé à la partie supérieure du guidon.

Enfin, les guidons de la plupart des tondeuses existantes ne sont pas entièrement démontables du carter des tondeuses, de sorte que la partie non démontable peut provoquer une gêne lors du transport ou pour l'emballage avant expédition.

On connaît également par FR-A-2 551 942 une tondeuse à gazon dont le guidon est pourvu d'un dispositif de montage et de blocage rapide, qui est constitué par deux ailes profilées coopérant avec des glissières solidaires du carter et par un organe de blocage à excentrique muni d'un écrou de réglage de son serrage. Cette tondeuse présente des boîtiers de commande qui sont munis de moyens de fixation élastiques, tels que des colliers, et leurs éléments de commande sont reliés, au moyen de câbles entourés chacun d'une gaine souple, aux organes commandés. Ainsi, le problème de la pluralité de gaines subsiste. En outre, le dispositif de montage et de blocage rapide permet, certes, un démontage du guidon, mais laisse subsister les deux ailes profilées en saillie sur le carter, en position de démontage.

La présente invention a pour but de pallier ces inconvénients.

Elle a, en effet, pour objet une tondeuse à gazon, en particulier poussée ou autotractée, essentiellement constituée par un carter logeant une ou plusieurs lames de coupe et sur lequel est monté un moteur d'entraînement de la ou des lames, par un guidon et par un dispositif de commande, le guidon étant constitué par un élément inférieur fixé sur le carter de la tondeuse et par un élément supérieur fixé de manière réglable en position sur l'élément inférieur et le dispositif de commande comportant des éléments d'actionnement individuel de plusieurs fonctions au moyen de transmissions linéaires, l'élément inférieur de guidon étant muni d'un crochet d'accrochage sur une partie du carter de la tondeuse, caractérisée en ce que l'élément inférieur de guidon est muni, en outre, d'un moyen d'assujettissement démontable sur ledit carter, ledit moyen d'assujettissement étant avantageusement constitué sous forme d'une languette plate prévue à l'extrémité inférieure dudit élément inférieur de guidon et pénétrant dans un logement de forme correspondante du carter et par une goupille traversant des perçages correspondants de la languette et des parois du logement, ladite goupille étant elle-même pourvue d'une goupille de sécurité, et en ce que les éléments d'actionnement individuel de plusieurs fonctions sont regroupés sur un boîtier de commande unique fixé de manière amovible sur l'élément supérieur de guidon et les transmissions linéaires correspondantes sont montées dans une gaine souple liée, d'une part, au carter de la tondeuse indépendamment du guidon et, d'autre part, au boîtier de commande.

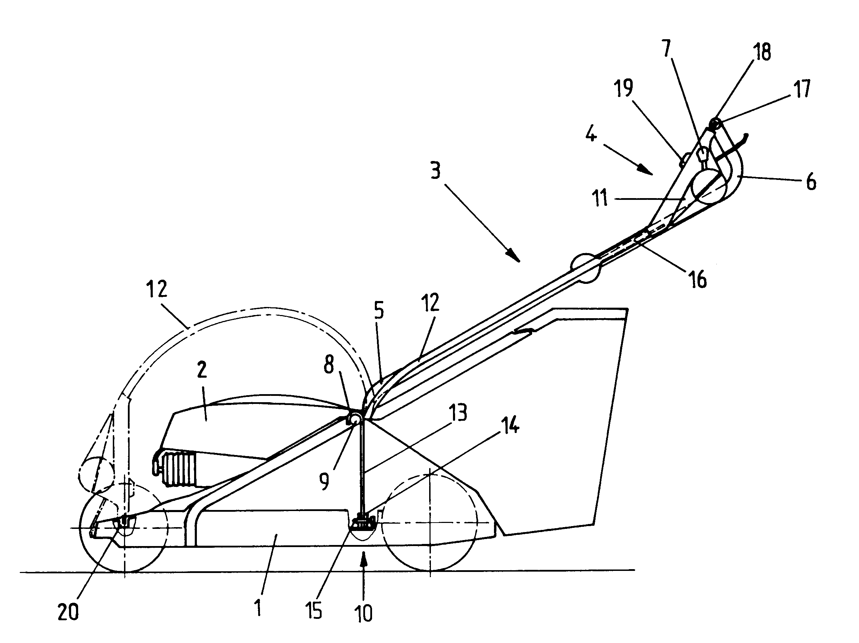

L'invention sera mieux comprise, grâce à la description ci-après, qui se rapporte à un mode de réalisation préféré, donné à titre d'exemple non limitatif et expliqué avec référence au dessin schématique annexé, dont la figure unique est une vue en élévation latérale, partiellement en coupe, d'une tondeuse conforme à l'invention.

La tondeuse à gazon, en particulier poussée ou autotractée, représentée au dessin annexé,est essentiellement constituée par un carter 1 logeant une ou plusieurs lames de coupe et sur lequel est monté un moteur 2 d'entraînement de la ou des lames, par un guidon 3 et par un dispositif de commande 4, le guidon 3 étant constitué par un élément inférieur 5 fixé sur le carter 1 de la tondeuse et par un élément supérieur 6 fixé de manière réglable en position sur l'élément inférieur 5 et le dispositif de commande 4 comportant des éléments 7 d'actionnement individuel de plusieurs fonctions au moyen de transmissions linéaires.

Conformément à l'invention, l'élément inférieur de guidon 5 est muni d'un crochet d'accrochage 8 sur une partie 9 du carter 1 de la tondeuse et d'un moyen 10 d'assujettissement démontable sur ledit carter 1.

Les éléments 7 d'actionnement individuel de plusieurs fonctions sont regroupés sur un boîtier de commande 11 unique qui est fixé de manière amovible sur l'élément supérieur 6 du guidon 3 et les transmissions linéaires correspondantes sont montées dans une gaine souple 12 qui est reliée, d'une part, au carter 1 de la tondeuse indépendamment du guidon 3 et, d'autre part, au boîtier de commande 11.

Le moyen 10 d'assujettissement démontable de l'élément inférieur de guidon 5 est avantageusement constitué sous forme d'une languette plate 13 prévue à l'extrémité inférieure dudit élément 5 et pénétrant dans un logement 14 de forme correspondante du carter 1 et par une goupille 15 traversant des perçages correspondants de la languette 13 et des parois du logement 14, ladite goupille 15 étant elle-même pourvue d'une goupille de sécurité (non représentée).

Grâce au moyen 10 et au crochet 8, le montage du guidon 3 sur le carter 1 est parfaitement rigide et le démontage dudit guidon 3 est rendu particulièrement aisé, du fait qu'il suffit simplement de démonter la goupille 15 pour enlever la partie inférieure 5 du carter 1 par une extraction verticale.

Le boîtier de commande 11 est fixé sur l'élément supérieur de guidon 6, d'une part, par emboîtement et coopération de forme d'un logement de sa partie inférieure sur une plaquette 16 solidaire dudit élément 6 et, d'autre part, par verrouillage de la position emboîtée au moyen d'un axe 17 pénétrant, du côté opposé à l'emboîtement, dans la traverse 18 de l'élément supérieur de guidon 6 et manoeuvrable, contre l'action d'un ressort, par un bouton 19. Ainsi, la mise en place du boîtier 11 peut être réalisée simplement par emboîtement du logement de sa partie inférieure sur la plaquette 16 puis par insertion de l'axe 17 dans le trou correspondant de la traverse 18 de l'élément 6 par manoeuvre au moyen du bouton 19.

Selon une autre caractéristique de l'invention, le carter 1 est pourvu près de son extrémité avant d'un autre logement 20 destiné à coopérer avec l'axe 17 du boîtier 11, qui est pourvu, en outre, d'un élément élastique d'encliquetage (non représenté) coopérant avec le carter ou un appendice de ce dernier.

Ce mode de réalisation permet le repliement du boîtier 11 solidaire de la gaine souple 12 au-dessus du moteur 2 et sa fixation sur le carter 1 pour le transport et l'emballage.

Grâce à l'invention, il est possible de réaliser une tondeuse à gazon poussée ou autotractée permettant un démontage complet et rapide du guidon, notamment pour le transport et l'emballage et dont les transmissions sont regroupées de manière sûre et esthétique en une seule gaine solidaire d'un boîtier de commande unique.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

**Revendications**

1. Tondeuse à gazon, en particulier poussée ou autotractée, essentiellement constituée par un carter (1) logeant une ou plusieurs lames de coupe et sur lequel est monté un moteur (2) d'entraînement de la ou des lames, par un guidon (3) et par un dispositif de commande (4), le guidon (3) étant constitué par un élément inférieur (5) fixé sur le carter (1) de la tondeuse et par un élément supérieur (6) fixé de manière réglable en position sur l'élément inférieur (5) et le dispositif de commande (4) comportant des éléments (7) d'actionnement individuel de plusieurs fonctions au moyen de transmissions linéaires, l'élément inférieur de guidon (5) étant muni d'un crochet d'accrochage (8) sur une partie (9) du carter (1) de la tondeuse, caractérisée en ce que l'élément inférieur de guidon (5) est muni, en outre, d'un moyen (10) d'assujettissement démontable sur ledit carter (1), ledit moyen (10) étant avantageusement constitué sous forme d'une languette plate (13) prévue à l'extrémité inférieure dudit élément (5) et pénétrant dans un logement (14) de forme correspondante du carter (1) et par une goupille (15) traversant des perçages correspondants de la languette (13) et des parois du logement (14), ladite goupille (15) étant elle-même pourvue d'une goupille de sécurité, et en ce que les éléments (7) d'actionnement individuel de plusieurs fonctions sont regroupés sur un boîtier de commande (11) unique fixé de manière amovible sur l'élément supérieur de guidon (6) et les transmissions linéaires correspondantes sont montées dans une gaine souple (12) liée, d'une part, au carter (1) de la tondeuse indépendamment du guidon (3) et, d'autre part, au boîtier de commande (11).

2. Tondeuse, suivant la revendication 1, caractérisée en ce que le boîtier de commande (11) est fixé sur l'élément supérieur de guidon (6), d'une part, par emboîtement et coopération de forme d'un logement de sa partie inférieure sur une plaquette (16) solidaire dudit élément (6) et, d'autre part, par verrouillage de la position emboîtée au moyen d'un axe (17) pénétrant, du côté opposé à l'emboîtement, dans la traverse (18) de l'élément supérieur de guidon (6) et manoeuvrable, contre l'action d'un ressort, par un bouton (19).

3. Tondeuse, suivant l'une quelconque des revendications 1 et 2, caractérisée en ce que le carter (1) est pourvu près de son extrémité avant d'un autre logement (20) destiné à coopérer avec l'axe (17) du boîtier (11), qui est pourvu, en outre, d'un élément élastique d'encliquetage coopérant avec le carter ou un appendice de ce dernier.

**Claims**

1. A lawnmower, in particular pushed or self-propelled, essentially constituted by a housing (1) accommodating one or more cutting blades and on which there is mounted a motor (2) for driving the blade or blades, by a handle (3) and by a control device (4), the handle being constituted by a lower element (5) fixed on the housing (1) of the lawnmower and by an upper element (6) fixed adjustably in position on the lower element (5) and the control device (4) comprising elements (7) for individual actuation of several functions by means of linear transmissions, the lower handle element (5) being equipped with a hook (8) for attachment to a part (9) of the housing (1) of the lawnmower, characterised in that the lower handle element (5) is equipped, in addition, with a means (10) for detachable connection to said housing (1), said means (10) being advantageously made up in the form of a flat tongue (13) provided at the lower end of said element (5) and penetrating into a receiver (14) of corresponding shape in the housing (1) and by a pin (15) traversing corresponding perforations in the tongue (13) and the walls of the receiver (14), said pin (15) itself being provided with a security pin, and in that the elements (7) for individual actuation of several functions are grouped on a single control box (11) fixed detachably on the upper handle element (6) and the corresponding linear transmissions are mounted in a flexible sheath (12) connected, on the one hand, to the housing (1) of the lawn mower independently of the handle (3) and, on the other hand, to the control box (11).

2. A lawnmower according to claim 1, characterised in that the control box (11) is fixed on the upper handle element (6), on the one hand, by the engagement and cooperation in shape of a receiver in its lower part on a plate (16) integral with said element (6) and, on the other hand, by the locking of the engaged position by means of a shaft (17) which penetrates, on the side remote from the engagement, in the cross member (18) of the upper handle element (6) and can be manoeuvred against the action of a spring by a button (19).

3. A lawnmower according to any one of claims 1 and 2, characterised in that the housing (1) is provided, close to its front end, with another receiver (20) intended to co-operate with the shaft (17) of the box (11) which is also provided with a resilient clipping element co-operating with the housing or a piece joined thereto.

**Patentansprüche**

1. Rasenmäher, insbesondere zum Schieben oder mit Eigenantrieb, welcher im wesentlichen aus einem Gehäuse (1), das ein oder mehrere Schneidmesser enthält und auf dem ein Antriebsmotor (2) des Messers oder der Messer angebracht ist, einem Lenker (3) und einer Steuervorrichtung (4) besteht, wobei der Lenker (3) von einem am Gehäuse (1) des Rasenmähers befestigten unteren Bestandteil (5) und einem, in seiner Lage regelbaren, am unteren Bestandteil (5) befestigten oberen Bestandteil (6) gebildet ist, wobei die Steuervorrichtung (4) aus mehreren Einzel-Betätigungsorganen (7) zur Steuerung der verschiedenen Funktionen, mittels linearer Übertragungsorgane, besteht und wobei das untere Bestandteil (5) des Lenkers (3) mit einem Haken (8), zum Anhängen auf einem Teil (9) des Gehäuses (1) des Rasenmähers, dadurch gekennzeichnet dass das untere Bestandteil (5) des Lenkers (3) ausserdem mit einem auf dem Gehäuse (1) befindlichen abnehmbaren Verbindungsmittel (10) versehen ist, wobei dieses Verbindungsmittel (10) vorteilhaft aus einer als flache Lasche (13) am unteren Ende des genannten Bestandteiles (5), die in eine Lagerung (14) entsprechender Form des Gehäuses (1) des Rasenmähers ragt, und aus einem Splint (15), der entsprechende Bohrungen der Lasche (13) und der Wandungen der Lagerung (14) durchquert, besteht, wobei dieser Splint (15) selbst mit einem Sicherungssplint versehen ist, und dass die Einzel-Betätigungsorgane (7) mehrere Funktionen in einer einzigen Steuereinheit (11), die abnehmbar am oberen Bestandteil (6) des Lenkers (3) befestigt ist, zusammen gefasst sind, und die entsprechenden linearen Übertragungsorgane sind in einer gelenkigen Hülle (12), die einerseits unabhängig vom Lenker (3) mit dem Gehäuse (1) des Rasenmähers und andererseits mit der Steuereinheit (11) verbunden ist, eingebaut.

2. Rasenmäher nach Anspruch 1, dadurch gekennzeichnet, dass die Steuereinheit am oberen Bestandteil (6) des Lenkers (3) befestigt ist, (11) einerseits durch Aufstechen und formanpassende Lagerung seines unteren Bestandteiles in eine Aufnahme (16), die mit dem oberen Bestandteil (6) des Lenkers (3) solidarisch wirkt, und andererseits durch Verriegelung in aufgeschobener Lage mittels eines Stiftes (17) der auf der Aufnahme gegenüberliegenden Seite in den Lenkerbügel (18) des oberen Bestandteiles (6) hineinragt und der mit Hilfe eines Knopfes (19) entgegen dem Druck einer Feder betätigungsfähig ist.

3. Rasenmäher nach einem der Ansprüche 1 und 2, dadurch gekennzeichnet, dass das Gehäuse (1) des Rasenmähers nahe von seinem vorderen Ende mit einer anderen Lagerung (20) versehen ist, die dazu dient mit dem Stift (17) der Steuereinheit (11) zu wirken, welche ausserdem ein federndes Einklinkelement in das Gehäuse (1) des Rasenmähers oder in ein Ansatzstück dieses Gehäuses besitzt.